# EUROPÄISCHE PATENTSCHRIFT

(11) **EP 1 915 686 B1**
(45) Veröffentlichungstag und Bekanntmachung des Hinweises auf die Patenterteilung: **11.03.2009**
(21) Anmeldenummer: 06777942.1
(22) Anmeldetag: 25.07.2006
(51) Int. Cl.: G06F 11/16

(54) **VERFAHREN UND VORRICHTUNG ZUR FESTLEGUNG EINES STARTZUSTANDES BEI EINEM RECHNERSYSTEM MIT WENIGSTENS ZWEI AUSFÜHRUNGSEINHEITEN DURCH MARKIEREN VON REGISTERN**
METHOD AND DEVICE FOR DETERMINING A START STATUS OF A COMPUTER SYSTEM HAVING AT LEAST TWO EXECUTION UNITS BY MARKING REGISTERS
PROCEDE ET DISPOSITIF POUR FIXER UN ETAT DE DEPART DANS UN SYSTEME DE CALCUL COMPRENANT AU MOINS DEUX UNITES D'EXECUTION PAR MARQUAGE DE REGISTRES

(30) Priorität: 08.08.2005 DE 102005037226
(43) Veröffentlichungstag der Anmeldung: 30.04.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064607
(87) Internationale Veröffentlichungsnummer: WO 2007/017371

(56) Entgegenhaltungen:
- EP-A1- 0 817 053
- US-A1- 2004 006 722
- US-B1- 6 272 616
- US-B1- 6 615 366

## Beschreibung

### Stand der Technik

Die Erfindung geht aus von einem Verfahren und einer Vorrichtung zur Umschaltung zwischen wenigstens zwei Betriebsmodi eines Mikroprozessors mit wenigstens zwei Ausführungseinheiten zur Abarbeitung von Programmsegmenten gemäß den Oberbegriffen der unabhängigen Ansprüche.

Transiente Fehler, ausgelöst durch Alpha-Teilchen oder kosmische Strahlung, werden zunehmend ein Problem für integrierte Schaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen müssen daher solche Fehler zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden gerade bei den entsprechenden Steuereinrichtungen solcher Systeme üblicherweise Redundanzen zur Fehlererkennung vorgesehen. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Solche Prozessoreinheiten sind auch als Dual-Core oder Multi-Core Architekturen bekannt. Die verschiedenen Cores führen redundant und taktsynchron das gleiche Programmsegment aus, die Ergebnisse der beiden Cores werden verglichen. Ein Fehler wird bei dem Vergleich auf Übereinstimmung der beiden Ergebnisse erkannt. Im Folgenden wird diese Konfiguration als Vergleichs modus bezeichnet Dual-Core oder Multi-Core Architekturen werden in anderen Anwendungen auch zur Leistungssteigerung, also zu einer Performanz-Steigerung eingesetzt. Beide Cores führen unterschiedliche Programmsegmente aus, wodurch sich eine Leistungssteigerung im Vergleich zum Vergleichsmodus oder einem Single Core System erzielen lässt. Diese Konfiguration wird als Leistungsmodus oder Performanzmodus bezeichnet. Dieses System wird auch in einer speziellen Ausprägung mit gleichen Cores als ein symmetrisches Multiprozessorsystem (SMP) bezeichnet. Eine Erweiterung dieser Systeme ist eine Umschaltung durch Software zwischen diesen beiden Modi mittel eines Zugriffs auf eine spezielle Adresse und spezialisierter Hardware-Vorrichtungen. Im Vergleichsmodus werden die Ausgangsignale der Cores miteinander verglichen. Im Performanzmodus arbeiten die beiden Cores als ein symmetrisches Mehrprozessorsystem (SMP) und führen unterschiedliche Programme, Programmsegmente oder Befehle aus.

Aus der US 6615366 B1 ist bereits ein Mehrprozessorrechner bekannt der einen Vergleichsmodus und einen Performanzmodus aufweist.

### Vorteile der Erfindung

Bei den im Stand der Technik beschriebenen Mikroprozessoren müssen vor dem Umschalten vom Performanzmodus in den Vergleichmodus die internen Zustände (Register, Pipeline, etc.) der Ausführungseinheiten angeglichen werden. Dies kann bei einer Ausführungseinheit mit vielen Registern relativ viel Rechenzeit in Anspruch nehmen und einen Moduswechsel vom Performanzmodus in den Vergleichsmodus verlängern. Das übliche Verfahren für die Angleichung der Zustände der Ausführungseinheiten besteht darin, alle Register in den Ausführungseinheiten auf den Wert Null zu setzen oder deren Inhalt als ungültig zu markieren.

Aufgabe dieser Erfindung ist es, diesen Wechsel vom Performanzmodus in den Vergleichmodus zu verkürzen. Die hier beschriebenen Ausführungsbeispiele haben gegenüber dem Stand der Technik den Vorteil, dass sie eine schnellere Umschaltung vom Performanzmodus in den Vergleichsmodus ermöglichten, da die Register der Ausführungseinheiten je nach Modus an dem sie beteiligt ist durch Verwendung der erfindungsgemäßen Verfahren schnell initialisiert werden können

Beansprucht wird ein Verfahren zur Festlegung eines Startzustandes bei einem Rechnersystem mit wenigstens zwei Ausführungseinheiten, wobei zwischen einem Performanzmodus und einem Vergleichsmodus umgeschaltet wird und bei Umschaltung aus dem Performanzmodus in den Vergleichsmodus ein Startzustand für den Vergleichsmodus erzeugt wird, **dadurch gekennzeichnet, dass** für den Startzustand potentiell anzugleichende Speicher oder Speicherbereiche mit einer Kennung versehen werden, ob die Daten und/oder Befehle in diesen Speichern oder Speicherbereichen für den Startzustand geändert werden müssen oder nicht geändert werden müssen. Vorteilhaft wird bei dem Startzustand wenigstens ein der jeweiligen Ausführungseinheit zugeordneter Speicher oder Speicherbereich mit wenigstens einem vorgebbaren Wert belegt, wenn die Kennung dies anzeigt. Vorteilhaft wird der erzeugte Startzustand der ersten Ausführungseinheit in einen Speicherbereich kopiert und die zweite Ausführungseinheit diesen erzeugten Startzustand aus diesem Speicherbereich übernimmt, wenn die Kennung dies anzeigt. Vorteilhaft wird der erzeugte Startzustand der ersten Ausführungseinheit von der zweiten Ausführungseinheit über einen speziellen Kommunikationskanal in wenigstens einen Speicher oder Speicherbereich übernommen, wenn die Kennung dies anzeigt. Vorteilhaft ist ein Startspeicher oder Startspeicherbereich vorgesehen und in diesem vorgegeben wird welche Speicher oder Speicherbereiche für den Startzustand geändert werden müssen. Vorteilhaft ist ein Register oder Registersatz vorgesehen und in diesem vorgegeben wird welche Speicher oder Speicherbereiche für den Startzustand geändert werden müssen. Vorteilhaft ist ein Startspeicher oder Startspeicherbereich vorgesehen und in diesem vorgegeben wird welche Speicher oder Speicherbereiche für den Startzustand nicht geändert werden müssen. Vorteilhaft ist ein Register oder Registersatz vorgesehen und in diesem vorgegeben wird welche Speicher oder Speicherbereiche für den Startzustand nicht geändert werden müssen. Beansprucht ist ein Vorrichtung zur Festlegung eines Startzustandes bei einem Rechnersystem mit wenigstens zwei Ausführungseinheiten enthalten, wobei zwischen einem Performanzmodus und einem Vergleichsmodus umgeschaltet wird und bei Umschaltung aus dem Performanzmodus in den Vergleichsmodus ein Startzustand für den Vergleichsmodus erzeugt wird, **dadurch gekennzeichnet, dass** wenigstens ein einer Ausführungseinheit zugeordneter Speicher oder Speicherbereich enthalten ist, der derart ausgestaltet ist, dass dieser sofern er für den Startzustand potentiell anzugleichen ist mit einer Kennung versehen werden kann, ob die Daten und/oder Befehle in diesen Speichern oder Speicherbereichen für den Startzustand geändert werden müssen oder nicht geändert werden müssen. Vorteilhaft handelt es sich bei dem Speicher oder Speicherbereich um wenigstens ein Register. Vorteilhaft ist ein Startspeicher oder Startspeicherbereich enthalten, der derart ausgestaltet ist, dass in diesem vorgegeben wird welche Speicher oder Speicherbereiche für den Startzustand geändert werden müssen. Vorteilhaft ist ein Register oder Registersatz enthalten, der derart ausgestaltet ist, dass in diesem vorgegeben wird welche Speicher oder Speicherbereiche für den Startzustand geändert werden müssen. Vorteilhaft ist ein Startspeicher oder Startspeicherbereich enthalten, der derart ausgestaltet ist, dass in diesem vorgegeben wird welche Speicher oder Speicherbereiche für den Startzustand nicht geändert werden müssen. Vorteilhaft ist ein Register oder Registersatz enthalten, der derart ausgestaltet ist, dass in diesem vorgegeben wird welche Speicher oder Speicherbereiche für den Startzustand nicht geändert werden müssen.

Weitere Vorteile und vorteilhafte Ausgestaltungen ergeben sich aus den Merkmalen der Ansprüche sowie der Beschreibung.

### Figuren

- Figur 1: zeigt den allgemeinen Aufbau eines Prozessors mit zwei Ausführungseinheiten und einer Vergleichseinheit.
- Figur 2: zeigt einen möglichen Aufbau einer Ausführungseinheit mit zwei unterschiedlichen Registergruppen und der Verarbeitungslogik.
- Figur 3: zeigt einen möglichen Aufbau einer Ausführungseinheit mit zwei unterschiedlichen Registersätzen und der Verarbeitungslogik. Die Registersätze sind ihrerseits noch mal in zwei unterschiedliche Gruppen unterteilt.
- Figur 4: zeigt zwei Ausführungseinheiten mit ihren internen Registern, einen Zwischenspeicher und einer Verbindung zwischen den Ausführungseinheiten zur Übertragung der internen Zustände.
- Figur 5: zeigt zwei Ausführungseinheiten mit ihren internen Registern und einen Zwischenspeicher zum Auslesen der internen Zustände für den Startzustand des Vergleichsmodus.
- Figur 6: zeigt den Aufbau eines Registers mit Nutz- und Steuerdaten.
- Figur 7: zeigt ein Multiprozessors mit zwei Ausführungseinheiten, sowie den internen Registern der Ausführungseinheiten.
- Figur 8: zeigt ein Multiprozessorsystem mit zwei Ausführungseinheiten, deren interne Register sowie einem speziellen Register

### Beschreibung der Ausführungsbeispiele

Manche Einheiten in den Figuren besitzen dieselbe Nummer sind aber zusätzlich mit a oder b gekennzeichnet. Wird mit der Nummer ohne den Zusatz a oder b referenziert, so ist eine der vorhandenen Einheiten aber keine spezielle Instanz gemeint. Wird nur eine bestimmte Instanz einer Einheit referenziert wird immer die Kennung a oder b der Nummer nachgestellt.

Als Ausführungseinheit kann im Folgenden dabei sowohl ein Prozessor, ein Core, eine CPU, als auch eine FPU (Floating Point Unit), ein DSP (Digitaler Signalprozessor), ein Coprozessor oder eine ALU (Arithmetic logical Unit) bezeichnet werden.

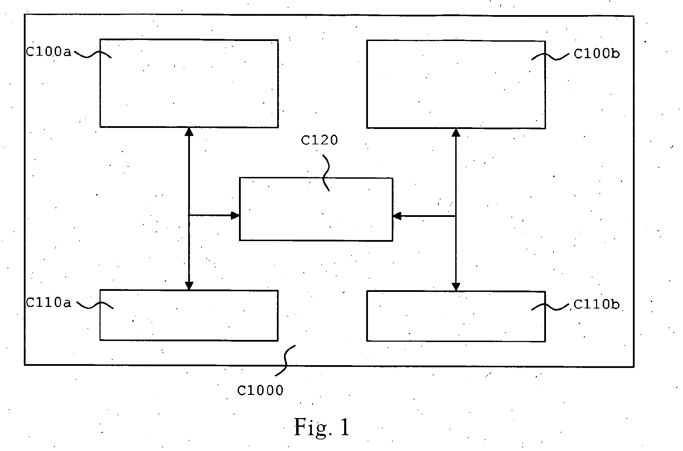

In Figur 1 ist ein Prozessorsystem C1000 dargestellt, welches zwischen einem Vergleichsmodus und einem Performanzmodus umschalten kann, bestehend aus zwei Ausführungseinheiten C100a und C100b. In einem bevorzugten Ausführungsbeispiel sind die Ausführungseinheiten identisch. Beide Ausführungseinheiten C100a und C100b besitzen jeweils eine Schnittstelle C110a bzw. C110b zum Systembus, über den zum Beispiel der Zugriff auf Speichermedien wie z.B. RAM, ROM, Flash oder auf Peripherieeinheiten erfolgt. Befindet sich das Prozessorsystem C1000 im Vergleichsmodus werden die Ausgangssignale der Ausführungseinheiten C100a, C100b über die Einheit C120 miteinander verglichen. Vorzugsweise erfolgt dieser Vergleich taktgenau oder mit einem festen Taktversatz, dies bedeutet, dass in jedem Takt die Ausgangssignale der wenigstens zwei Ausführungseinheiten C100a, C100b durch die Einheit C120 verglichen werden. Besteht ein Unterschied zwischen den verglichenen Signalen, dann wird von der Einheit C120 ein Fehlersignal generiert. Optional können auch zusätzlich die Eingangssgnale der Ausführungseinheiten C100a und C100b verglichen werden. Befindet sich das Prozessorsystem C1000 im Performanzmodus ist die Vergleichseinheit C120 nicht aktiv und es wird bei Unterschieden in den Ausgangssignalen der Ausführungseinheiten kein Fehlersignal generiert. Die Deaktivierung der Vergleichseinheit kann auf verschiedene Weisen realisiert werden: Ein Vergleich durch die Einheit C120 wird nicht durchgeführt.
Es werden keine Signale zum Vergleich an die Einheit C120 angelegt.
Ein Vergleich findet durch die Einheit C120 statt, das Ergebnis wird aber ignoriert.

Bei dem Wechsel vom Performanzmodus in den Vergleichsmodus muss sichergestellt,werden, dass der interne Zustand der beiden Ausführungseinheiten C100a und C100b mit Beginn des Vergleichsmodus, also der Zeitpunkt zu dem der Vergleicher C120 aktiviert wird, identisch ist. Wir bezeichnen im Folgenden den Zustand zu Beginn des Vergleichsmodus vondem ausgehend im Vergleichsmodus die Berechnungen beginnen als Startzustand. Dass die Zustände in den Ausführungseinheiten identisch sein müssen, ist notwendig, damit im fehlerfreien Fall zu keinem Zeitpunkt im Vergleichsmodus die durch C120 verglichenen Signale Unterschiede aufweisen. Unterschiedliche Zustände der Ausfürungseinheiten im Vergleichsmodus werden in der Regel dazu führen, dass ein unterschiedliches Ausgangssignal erzeugt wird. Diese unterschiedlichen Ausgangssignale würde der Vergleicher als Fehler detektieren, obwohl gleiche Eingangssignale vorliegen und kein zu detektierender Fehler bei der Verarbeitung aufgetreten ist.

Ein Weg in beiden Ausführungseinheiten den gleichen Zustand zu Beginn des Vergleichsmodus zu erreichen, ist das Markieren aller internen Register in den Ausführungseinheiten als ungültig. Diese Möglichkeit der Markierung besteht aber nicht bei allen internen Registern. Diese müssen dann auf einen definierten Wert gesetzt werden, der in beiden Ausführungseinheiten identisch ist.

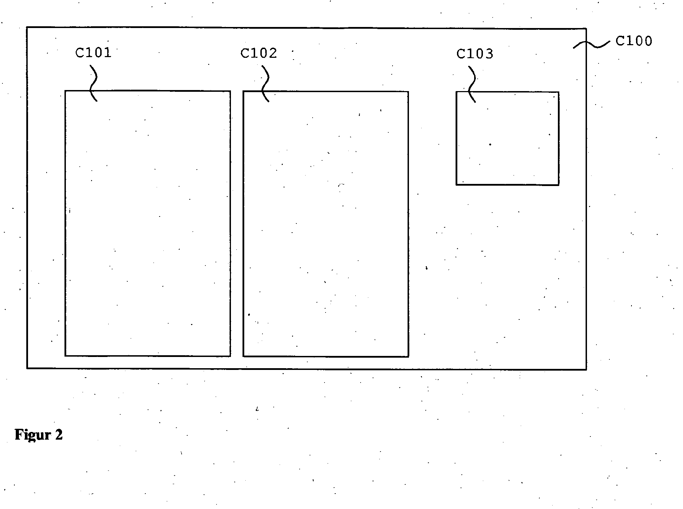

In einer ersten Ausführungsform, dargestellt in Figur 2, wird ein Umschalten zwischen zwei Registersätzen beschrieben. In Figur 2 wird eine mögliche Implementierung der Ausführungseinheit C100 beschrieben. Sie enthält mindestens zwei unterschiedliche Gruppen von Registern C101 und C102 und eine interne Logik C103. Die Gruppe von Registern C101 kann als un gültig markiert werden. Dies bedeutet, dass die interne Logik C103 der Ausführungseinheit beim Zugriff auf ein als ungültig markiertes Register dieser Gruppe erkennt, dass der Inhalt für dieses Register neu ermittelt werden muss; zum Beispiel durch Nachladen aus dem RAM, ROM, Flash oder durch Neuberechnung. Register aus der anderen Gruppe C102 haben immer einen gültigen Inhalt. Die Arbeitsregister einer Ausführungseinheit gehören beispielsweise zu dieser Gruppe.

Findet ein Wechsel vom Performanzmodus zum Vergleichsmodus statt, müssen diese Register aus C101 und C102 in beiden Ausführungseinheiten C100, wie schon erwähnt, identisch sein.

Diese Bedingung für die Registergruppe C101, C102 muss nicht unbedingt ab dem Zeitpunkt der Umschaltung vom Performanzmodus in den Vergleichmodus gelten, aber spätestens beim ersten Lesezugriff auf zwei identische Register in den Ausführungseinheiten C100 nach der Umschaltung in den Vergleichsmodus. Ein übliches Verfahren besteht darin, rechtzeitig voroder nach der Umschaltung in den Vergleichsmodus allen Registern der Gruppe C102 einen festen Wert zuzuweisen. Unabhängig davon werden bei einer Umschaltung in den Vergleichsmodus Register der Gruppe C101 als ungültig markiert.

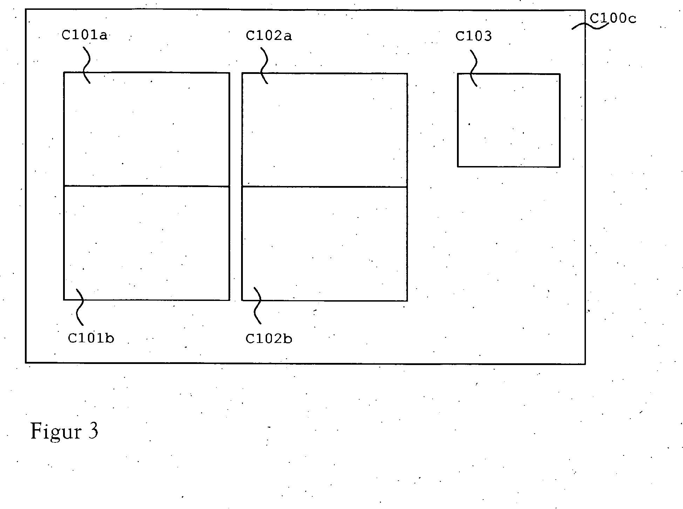

Ist eine Ausführungseinheit C100 wie in Figur 3 gemäß C100c aufgebaut, kann dieser Vorgang durch den Einsatz von zwei Registersätzen C101a, C 102a und C101b, C102b in jeder der Ausführungseinheiten beschleunigt werden. Statt vor, während oder nach einer Umschaltung die Register anzugleichen, werden im Performanzmodus und im Vergleichsmodus unterschiedliche Register verwendet. Im Vergleichsmodus werden die Register der Gruppe C101a und C102a verwendet, während im Performanzmodus die Register der Gruppe C101b und C102b verwendet werden. Zwischen diesen Registersätzen wird zum Zeitpunkt der Umschaltung in den Vergleichsmodus oder in den Performanzmodus umgeschaltet. Ist für die Register 101a und 102a einmal sichergestellt, dass der Inhalt identisch ist, zum Bespiel durch eine entsprechende Initialisierung bei Einschalten des Prozessors, so bleiben diese Register auch während des Betriebs auf beiden Ausführungseinheiten gleich. Somit ist bei einer Umschaltung vom Performanzmodus in den Vergleichsmodus keine Angleichung der Registerinhalte notwendig, da im Vergleichsmodus immer nur auf Register zugegriffen wird, die zwischen den beiden Ausführungseinheiten C100a und C100b identisch sind und nur im Vergleichmodus beschrieben werden können.

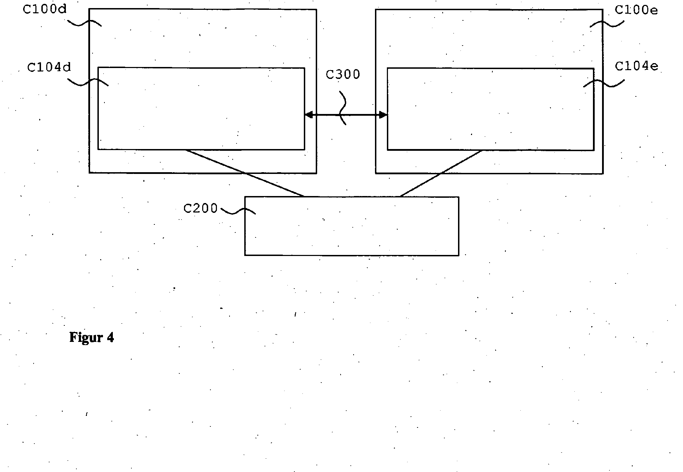

Eine weitere Möglichkeit der Beschleunigung des Umschaltvorgangs vom Performanzmodus in den Vergleichsmodus wird in Figur 4 gezeigt. Sie besteht in dem Kopieren des internen Zustands C104d resp. C 104e von einer Ausführungseinheit C 100d, C 100e zu der anderen Ausführungseinheit C100d bzw. C100e. Im Betrieb wird bei einer Umschaltung vom Performanzmodus in den Vergleichsmodus üblicherweise eine Ausführungseinheit zeitlich früher für eine Umschaltung tereit sein als die andere Ausführungseinheit. Werden die internen Register einer Ausführungseinheit (C104d bei C100d und C104e bei C100e), die zeitlich früher bereit ist, vor der Umschaltung auf die Werte initialisiert, welche im Vergleichsmodus benötigt werden, so kann der interne Zustand einer zweiten, zeitlich nachfolgenden Ausführungseinheit angeglichen werden, indem der Zustand von der ersten Ausführungseinheit übernommen wird. Ist zum Beispiel die Ausführungseinheit C100d früher bereit für eine Umschaltung als die Ausführungseinheit C100e so wird bei der Umschaltung der Zustand C104d nach C104e kopiert.

Dieses Kopieren des internen Zustandes kann durchgeführt werden, indem direkt eine Verbindung C300 zwischen den beiden Ausführungseinheiten genutzt wird, über die der interne Zustand kopiert wird. Alternativ kann der Zustand von einer ersten, zeitlich früheren Ausführungseinheit in einen (schnell angebundenen) Zwischenspeicher C200 kopiert werden, aus dem eine zweite, zeitlich folgende Ausführungseinheit den Zustand in die internen Register übernimmt.

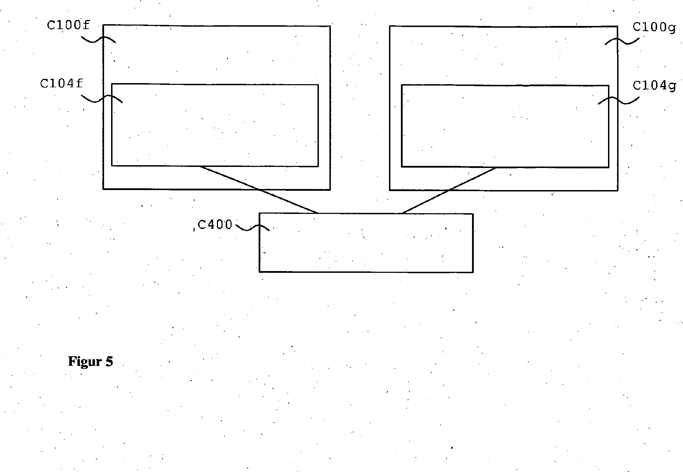

In einer weiteren Ausführungsform, dargestellt in Figur 5, wird die Initialisierung der internen Zustände für den Vergleichmodus durch Kopieren der Registerinhalte aus einem Speicherbereich mit einer schnellen Anbindung beschrieben. Es wird dabei vorausgesetzt, dass zu Beginn des Performanzmodus der interne Zustand C104f, C104g der mindestens zwei Ausführungseinheiten C100f, C100g immer auf genau einen definierten Wert gesetzt werden. Dieser Wert ist in einem Speicher C400 gespeichert, der eine möglichst schnelle Anbindung an die Ausführungseinheiten C100f, C100g und damit an die Register C104f, C104g hat. Dieser Speicher ist vorzugsweise nichtflüchtig. Es ist aber auch ein flüchtiger Speicher möglich, wenn der im Speicher gespeicherte Initialisierungszustand für den Performanzmodus bei der Initialisierung des Multiprozessorsystems aus einem nichtflüchtigen Speicher kopiert wird, von einer externen Datenquelle empfangen wird oder vom Multiprozessorsystem generiert wird. Zur Umschaltung oder bei der Umschaltung vom Performanzmodus in den Vergleichsmodus wird der im Speicher C400 gespeicherte Initialisierungszustand für den Vergleichsmodus in die Register C104f, C104g der wenigstens zwei Ausführungseinheiten C100f, C100g, die im Vergleichsmodus betrieben werden sollen, geschrieben.

In einer weiteren Ausführungsform werden Teilzustände markiert, die bei einer Umschaltung in den Vergleichsmodus zwischen den Ausführungseinheiten nicht angeglichen werden müssen. Nicht immer ist es notwendig alle Register der Ausführungseinheiten bei einer Umschaltung vom Performanzmodus in den Vergleichsmodus anzugleichen. Damit im Vergleichsmodus nicht irrtümlich auf ein Fehler erkannt, wird müssen nur die Register einer Ausführungseinheit mit den Registern einer zweiten Ausführungseinheit angeglichen werden, die im Vergleichsmodus tatsächlich benutzt werden. Vor allem bei Architekturen die ein große Anzahl von Registern in den Ausführungseinheiten vorsehen, ist dies der Fall bzw. kann bei der Softwareentwiddung als Nebenbedingung berücksichtigt werden. Die Anzahl der Register die in einem Vergleichsmodus benutzt werden, kann auf jeden Fall bestimmt werden. Falls nun nicht alle benutzt Werden ist es nicht notwendig alle Register anzugleichen sondern nur die verwendeten. Deswegen wird vorgeschlagen in jedem Register zusätzliche Bits vorzusehen. In diesen Bits kann kodiert werden, ob der Inhalt dieses Registers mit den entsprechenden Registers der anderen Ausführungseinheiten beim Umschalten von einem Performanzmodus in einen Vergleichsmodus angeglichen werden soll oder nicht. Alternativ kann ein spezielles Register existieren, dessen Inhalt definiert, welches Register einer Ausführungseinheit mit den entsprechenden Registern der anderen Ausführungseinheiten angeglichen werden muss. Die Angleichung selbst kann unabhängig von den Markierungen über die bekannten oder hier vorgestellten Verfahren geschehen.

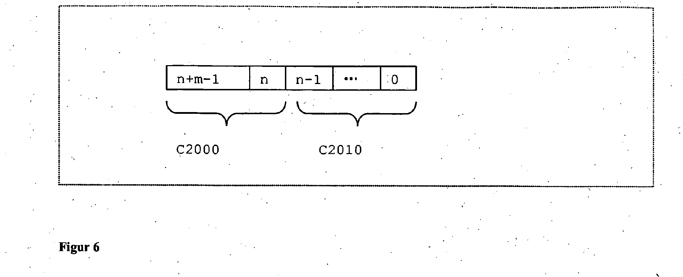

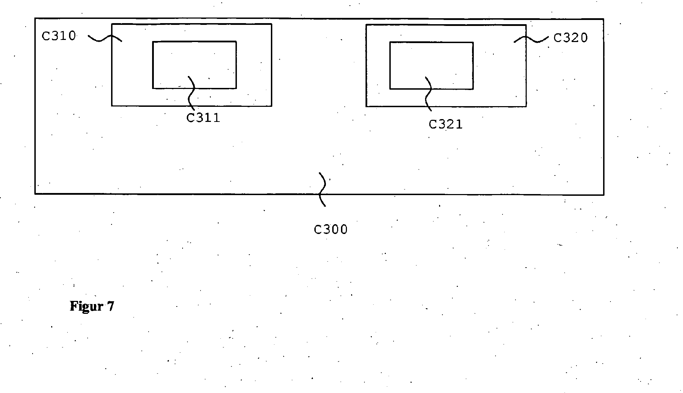

Figur 7 zeigt ein Prozessorsystem C300 mit mehreren Ausführungseinheiten C310, C320 mit ihren Registern C311, C321. Jedes Register aus C311, C321 besteht aus n Bits (n > 1) mit Nutzdaten (dargestellt in Figur 6 C2010). Zusätzlich zu jeden dieser n Bits kommen m Bits (m >= 1) mit Steuerdaten (dargestellt in Figur 6 C2000). In diesen m-Bits ist kodiert, ob beim Wechsel in den Vergleichsmodus eine Angleichung stattfindet. Bestehen die Steuerbits im einfachsten Fall nur aus einen Bit bedeutet zum Beispiel ein Wert von Null, dass eine Angleichung nicht stattfinden muss und ein Wert von Eins, dass eine Angleichung stattfinden muss. Die Auswertung dieser Bits geschieht dann bei der Umschaltung vom Performanz in den Vergleichsmodus.

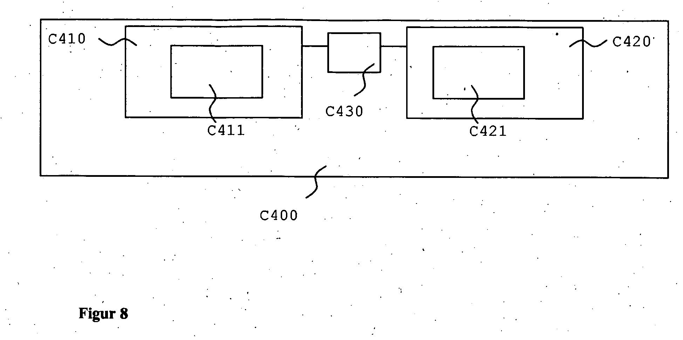

Figur 8 zeigt eine weitere Ausführungsform der Erfindung mit einem Prozessorsystem C400, welches Ausführungseinheiten C410, C420 mit ihren Registern C411, C422 beinhaltet. Zusätzlich besitzt das Prozessorsystem C400 ein Register C430. Der Inhalt dieses Registers C430 definiert, welche Register aus C411, C421 der Ausführungseinheiten C410, C420 bei einem Wechsel in den Vergleichsmodus angeglichen werden müssen. Zum Beispiel kann das Register C430 so realisiert werden, dass für jedes potentiell anzugleichende Register aus C411, C421 ein Bit in C430 vorgesehen ist. Ist das entsprechende Bit gesetzt muss das korrespondierende Register angeglichen werden, ist das Bit nicht gesetzt muss das korrespondierende Register nicht angeglichen werden. Die Auswertung dieses Registers geschieht darin bei der Umschaltung vom Performanz in den Vergleichsmodus. In einer weiteren Ausführungsform welche nicht in einer Figur dargestellt ist, wird nicht ein zentrales Register C430, wie in Figur 8 dargestellt, vorgesehen, sondern es wird in jeder Ausführungseinheit ein Register vorgesehen, dass die Aufgabe des-Registers C430 wahrnimmt. Dies bedeutet in diesem Register wird kodiert welche der Register der Ausführungseinheit bei einer Umschaltung vom Performanzmodus in einen Vergleichsmodus an die Register wenigstens einer zweiten Ausführungseinheit angepasst werden müssen. Bei einer Umschaltung vom einem Performanzmodus in einen Vergleichsmodus muss dann allerdings sichergestellt werden, dass die Inhalte dieser Spezialregister in allen zu synchronisierenden Ausführungseinheiten identisch sind.

## Patentansprüche

1. Verfahren zur Festlegung eines Startzustandes bei einem Rechnersystem mit wenigstens zwei Ausführungseinheiten (C100, C310, C320, C410, C420), wobei zwischen einem Performanzmodus und einem Vergleichsmodus umgeschaltet wird und bei Umschaltung aus dem Performanzmodus in den Vergleichsmodus ein gleicher interner Startzustand der Ausführungseinheiten (C100, C310, C320, C410, C420) für den Vergleichsmodus erzeugt wird, **dadurch gekennzeichnet, dass** die für den internen Startzustand potentiell anzugleichenden internen Speicher oder Speicherbereiche (C101, C102, C104, C311, C321, C411, C421) der Ausführungseinheiten (C100, C310, C320, C410, C420) mit einer Kennung versehen werden, die angibt, ob die Daten und/oder Befehle in diesen Speichern oder Speicherbereichen (C101, C102, C104, C311, C321, C411, C421) für den Startzustand angeglichen werden müssen oder nicht angeglichen werden müssen.

2. Verfahren nach Anspruch 1, **dadurch gekennzeichnet, dass** für den Startzustand wenigstens ein interner Speicher oder Speicherbereich (C101, C102, C104, C311, C321, C411, C421) der jeweiligen Ausführungseinheit (C100, C310, C320, C410, C420) mit wenigstens einem vorgebbaren Wert belegt wird, wenn die Kennung dies anzeigt.

3. Verfahren nach Anspruch 1, **dadurch gekennzeichnet, dass** der erzeugte Startzustand einer ersten Ausführungseinheit (C100, C310, C320, C410, C420) in einen Speicherbereich kopiert wird und eine zweite Ausführungseinheit (C100, C310, C320, C410, C420) diesen erzeugten Startzustand aus diesem Speicherbereich übernimmt, wenn die Kennung dies anzeigt.

4. Verfahren nach Anspruch 1, **dadurch gekennzeichnet, dass** der erzeugte Startzustand einer ersten Ausführungseinheit (C100, C310, C320, C410, C420) von einer zweiten Ausführungseinheit (C100, C310, C320, C410, C420) über einen speziellen Kommunikationskanal in wenigstens einen der internen Speicher oder Speicherbereiche (C101, C102, C104, C311, C321, C411, C421) übernommen wird, wenn die Kennung dies anzeigt.

5. Verfahren nach Anspruch 1, **dadurch gekennzeichnet, dass** ein Startspeicher oder Startspeicherbereich vorgesehen ist und in diesem vorgegeben wird, welche der internen Speicher oder Speicherbereiche (C101, C102, C104, C311, C321, C411, C421) für den Startzustand angeglichen werden müssen.

6. Verfahren nach Anspruch 1, **dadurch gekennzeichnet, dass** ein Register oder Registersatz vorgesehen ist und in diesem vorgegeben wird, welche der internen Speicher oder Speicherbereiche (C101, C102, C104, C311, C321, C411, C421) für den Startzustand angeglichen werden müssen.

7. Verfahren nach Anspruch 1, **dadurch gekennzeichnet, dass** ein Startspeicher oder Startspeicherbereich vorgesehen ist und in diesem vorgegeben wird, welche der internen Speicher oder Speicherbereiche (C101, C102, C104, C311, C321, C411, C421) für den Startzustand nicht angeglichen werden müssen.

8. Verfahren nach Anspruch 1, **dadurch gekennzeichnet, dass** ein Register oder Registersatz vorgesehen ist und in diesem vorgegeben wird, welche der internen Speicher oder Speicherbereiche (C101, C102, C104, C311, C321, C411, C421) für den Startzustand nicht angeglichen werden müssen.

9. Vorrichtung zur Festlegung eines Startzustandes bei einem Rechnersystem mit wenigstens zwei Ausführungseinheiten (C100, C310, C320, C410, C420), wobei zwischen einem Performanzmodus und einem Vergleichsmodus umgeschaltet wird und bei Umschaltung aus dem Performanzmodus in den Vergleichsmodus ein gleicher interner Startzustand der Ausführungseinheiten für den Vergleichsmodus erzeugt wird, **dadurch gekennzeichnet, dass** in den Ausführungseinheiten (C100, C310, C320, C410, C420) wenigstens ein interner Speicher oder Speicherbereich (C101, C102, C104, C311, C321, C411, C421) enthalten ist, der derart ausgestaltet ist, dass dieser, sofern er für den Startzustand potentiell anzugleichen ist, mit einer Kennung versehen wird, die angibt, ob die Daten und/oder Befehle in diesen internen Speichern oder Speicherbereichen (C101, C102, C104, C311, C321, C411, C421) für den Startzustand angeglichen werden müssen oder nicht angeglichen werden müssen.

10. Vorrichtung nach Anspruch 9, **dadurch gekennzeichnet, dass** es sich bei dem internen Speicher oder Speicherbereich (C101, C102, C104, C311, C321, C411, C421) um wenigstens ein Register handelt.

11. Vorrichtung nach Anspruch 9, **dadurch gekennzeichnet, dass** ein Startspeicher oder Startspeicherbereich enthalten ist, der derart ausgestaltet ist, dass in diesem vorgegeben wird, welche der internen Speicher oder Speicherbereiche (C101, C102, C104, C311, C321, C411, C421) für den Startzustand angeglichen werden müssen.

12. Vorrichtung nach Anspruch 9, **dadurch gekennzeichnet, dass** ein Register oder Registersatz enthalten ist, der derart ausgestaltet ist, dass in diesem vorgegeben wird, welche der internen Speicher oder Speicherbereiche (C101, C102, C104, C311, C321, C411, C421) für den Startzustand angeglichen werden müssen.

13. Vorrichtung nach Anspruch 9, **dadurch gekennzeichnet, dass** ein Startspeicher oder Startspeicherbereich enthalten ist, der derart ausgestaltet ist, dass in diesem vorgegeben wird, welche der internen Speicher oder Speicherbereiche (C101, C102, C104, C311, C321, C411, C421) für den Startzustand nicht angeglichen werden müssen.

14. Vorrichtung nach Anspruch 9, **dadurch gekennzeichnet, dass** ein Register oder Registersatz enthalten ist, der derart ausgestaltet ist, dass in diesem vorgegeben wird, welche der internen Speicher oder Speicherbereiche (C101, C102, C104, C311, C321, C411, C421) für den Startzustand nicht angeglichen werden müssen.

## Claims

1. Method for stipulating a starting state in a computer system having at least two execution units (C100, C310, C320, C410, C420), wherein a performance mode and a comparison mode are changed over and an identical internal starting state for the execution units (C100, C310, C320, C410, C420) is produced for the comparison mode upon changeover from the performance mode to the comparison mode, **characterized in that** the internal memories or memory areas (C101, C102, C104, C311, C321, C411, C421) - which potentially need to be aligned for the internal starting state - in the execution units (C100, C310, C320, C410, C420) are provided with an identifier which indicates whether the data and/or commands in these memories or memory areas (C101, C102, C104, C311, C321, C411, C421) need to be aligned or do not need to be aligned for the starting state.

2. Method according to Claim 1, **characterized in that,** for the starting state, at least one internal memory or memory area (C101, C102, C104, C311, C321, C411, C421) in the respective execution unit (C100, C310, C320, C410, C420) is provided with at least one prescribable value when the identifier indicates this.

3. Method according to Claim 1, **characterized in that** the starting state produced for a first execution unit (C100, C310, C320, C410, C420) is copied to a memory area and a second execution unit (C100, C310, C320, C410, C420) adopts this produced starting state from this memory area when the identifier indicates this.

4. Method according to Claim 1, **characterized in that** the starting state produced for a first execution unit (C100, C310, C320, C410, C420) is transferred from a second execution unit (C100, C310, C320, C410, C420) via a specific communication channel to at least one of the internal memories or memory areas (C101, C102, C104, C311, C321, C411, C421) when the identifier indicates this.

5. Method according to Claim 1, **characterized in that** a starting memory or starting memory area is provided, and said starting memory or starting memory area is used to prescribe which of the internal memories or memory areas (C101, C102, C104, C311, C321, C411, C421) need to be aligned for the starting state.

6. Method according to Claim 1, **characterized in that** a register or register set is provided, and said register or register set is used to prescribe which of the internal memories or memory areas (C101, C102, C104, C311, C321, C411, C421) need to be aligned for the starting state.

7. Method according to Claim 1, **characterized in that** a starting memory or starting memory area is provided, and said starting memory or starting memory area is used to prescribe which of the internal memories or memory areas (C101, C102, C104, C311, C321, C411, C421) do not need to be aligned for the starting state.

8. Method according to Claim 1, **characterized in that** a register or register set is provided, and said register or register set is used to prescribe which of the internal memories or memory areas (C101, C102, C104, C311, C321, C411, C421) do not need to be aligned for the starting state.

9. Apparatus for stipulating a starting state in a computer system having at least two execution units (C100, C310, C320, C410, C420), wherein a performance mode and a comparison mode are changed over and an identical internal starting state for the execution units is produced for the comparison mode upon changeover from the performance mode to the comparison mode, **characterized in that** the execution units (C100, C310, C320, C410, C420) contain at least one internal memory or memory area (C101, C102, C104, C311, C321, C411, C421) which is in a form such that, provided that it potentially needs to be aligned for the starting state, it is provided with an identifier which indicates whether the data and/or commands in these internal memories or memory areas (C101, C102, C104, C311, C321, C411, C421) need to be aligned or do not need to be aligned for the starting state.

10. Apparatus according to Claim 9, **characterized in that** the internal memory or memory area (C101, C102, C104, C311, C321, C411, C421) is at least one register.

11. Apparatus according to Claim 9, **characterized in that** a starting memory or starting memory area is included which is in a form such that it is used to prescribe which of the internal memories or memory areas (C101, C102, C104, C311, C321, C411, C421) need to be aligned for the starting state.

12. Apparatus according to Claim 9, **characterized in that** a register or register set is included which is in a form such that it is used to prescribe which of the internal memories or memory areas (C101, C102, C104, C311, C321, C411, C421) need to be aligned for the starting state.

13. Apparatus according to Claim 9, **characterized in that** a starting memory or starting memory area is included which is in a form such that it is used to prescribe which of the internal memories or memory areas (C101, C102, C104, C311, C321, C411, C421) do not need to be aligned for the starting state.

14. Apparatus according to Claim 9, **characterized in that** a register or register set is included which is in a form such that it is used to prescribe which of the internal memories or memory areas (C101, C102, C104, C311, C321, C411, C421) do not need to be aligned for the starting state.

## Revendications

1. Procédé de détermination de l'état de démarrage d'un système d'ordinateurs qui présente au moins deux unités d'exécution (C100, C310, C320, C410, C420),
dans lequel on commute entre un mode de performances et un mode de comparaison et, lors de la commutation du mode de performances au mode de comparaison, un même état interne de démarrage des unités d'exécution (C100, C310, C320, C410, C420) est formé pour le mode de comparaison,
**caractérisé en ce que**
les mémoires internes ou zones de mémoire interne (C101, C102, C104, C311, C321, C411, C421) des unités d'exécution (C100, C310, C320, C410, C420) qui doivent éventuellement être comparées pour l'état de démarrage interne sont dotées d'une identification qui indique si les données et/ou les ordres doivent ou non être comparés dans ces mémoires ou zones de mémoire (C101, C102, C104, C311, C321, C411, C421).

2. Procédé selon la revendication 1, **caractérisé en ce que** pour l'état de démarrage, au moins une mémoire interne ou une zone de mémoire interne (C101, C102, C104, C311, C321, C411, C421) de chaque unité d'exécution (C100, C310, C320, C410, C420) sont occupées par au moins une valeur prédéterminée si l'identification l'indique.

3. Procédé selon la revendication 1, **caractérisé en ce que** l'état de démarrage formé pour une première unité d'exécution (C100, C310, C320, C410, C420) est copié dans une zone de mémoire et **en ce qu'**une deuxième unité d'exécution (C100, C310, C320, C410, C420) reprend dans cette zone de mémoire l'état de démarrage formé si l'identification l'indique.

4. Procédé selon la revendication 1, **caractérisé en ce que** l'état de démarrage formé pour une première unité d'exécution (C100, C310, C320, C410, C420) est repris par une deuxième unité d'exécution (C100, C310, C320, C410, C420) par l'intermédiaire d'un canal de communication spécial dans au moins une des mémoires internes ou zones de mémoire internes (C101, C102, C104, C311, C321, C41, C421) si l'identification l'indique.

5. Procédé selon la revendication 1, **caractérisé en ce qu'**une mémoire de démarrage ou une zone de mémoire de démarrage dans lesquelles celles des mémoires internes ou zones de mémoire internes (C101, C102, C104, C311, C321, C411, C421) qui doivent être comparée pour l'état de démarrage sont prédéterminées y sont prévues.

6. Procédé selon la revendication 1, **caractérisé en ce qu'**un registre ou un jeu de registres dans lesquels celles des mémoires internes ou des zones de mémoire internes (C101, C102, C104, C311, C321, C411, C421) qui doivent être comparées pour l'état de démarrage sont prédéterminées y sont prévus.

7. Procédé selon la revendication 1, **caractérisé en ce qu'**une mémoire de démarrage ou une zone de mémoire de démarrage dans lesquelles celles des mémoires internes ou des zones de mémoire internes (C101, C102, C104, C311, C321, C411, C421) qui ne doivent pas être comparées pour l'état de démarrage sont prédéterminées y sont prévues.

8. Procédé selon la revendication 1, **caractérisé en ce qu'**un registre ou un jeu de registres dans lesquels celles des mémoires internes ou des zones de mémoire internes (C101, C102, C104, C311, C321, C411, C421) qui ne doivent pas être comparées pour l'état de démarrage sont prédéterminées y sont prévus.

9. Dispositif de détermination de l'état de démarrage d'un système d'ordinateurs qui présente au moins deux unités d'exécution (C100, C310, C320, C410, C420),
dans lequel on commute entre un mode de performances et un mode de comparaison et, lors de la commutation du mode de performances au mode de comparaison, on forme un même état interne de démarrage des unités d'exécution pour le mode de comparaison,
**caractérisé en ce que**
au moins une mémoire interne ou une zone de mémoire interne (C101, C102, C104, C311, C321, C411, C421) sont reprises dans les unités d'exécution (C100, C310, C320, C410, C420), et **en ce que** cette mémoire interne ou cette zone de mémoire interne sont configurées de telle sorte que, lorsqu'il faut éventuellement effectuer la comparaison pour l'état de démarrage, elles sont dotées d'une identification qui indique si les données et/ou les ordres contenus dans ces mémoires internes ou ces zones de mémoire internes (C101, C102, C104, C311, C321, C411, C421) doivent ou non être comparées pour l'état de démarrage.

10. Dispositif selon la revendication 9, **caractérisé en ce que** la mémoire interne ou la zone de mémoire interne (C101, C102, C104, C311, C321, C411, C421) sont formées d'au moins un registre.

11. Dispositif selon la revendication 9, **caractérisé en ce qu'**il contient une mémoire de démarrage ou une zone de mémoire de démarrage configurées de telle sorte que celles des mémoires internes ou des zones de mémoire internes (C101, C102, C104, C311, C321, C411, C421) qui doivent être comparées pour l'état de démarrage y sont prédéterminées.

12. Dispositif selon la revendication 9, **caractérisé en ce qu'**il présente un registre ou un jeu de registres configuré de telle sorte que celles des mémoires internes ou des zones de mémoire internes (C101, C102, C104, C311, C321, C411, C421) qui doivent être comparées pour l'état de démarrage y sont prédéterminées.

13. Dispositif selon la revendication 9, **caractérisé en ce qu'**il présente une mémoire de démarrage ou une zone de mémoire de démarrage configurées de telle sorte que celles des mémoires internes ou des zones de mémoire interne (C101, C102, C104, C311, C321, C411, C421) qui ne doivent pas être comparées pour l'état de démarrage y sont prédéterminées.

14. Dispositif selon la revendication 9, **caractérisé en ce qu'**il présente un registre ou un jeu de registres configuré de telle sorte que celles des mémoires internes ou des zones de mémoire internes (C101, C102, C104, C311, C321, C411, C421) qui ne doivent pas être comparées pour l'état de démarrage y sont prédéterminées.
